# EUROPÄISCHE PATENTANMELDUNG

(11) **EP 3 159 167 A2**
(43) Veröffentlichungstag der Anmeldung: **26.04.2017**
(21) Anmeldenummer: 16186521.7
(22) Anmeldetag: 31.08.2016
(51) Int. Cl.: B41F 13/08

(54) **VERFAHREN ZUR HERSTELLUNG EINES ROTATIONSKÖRPERS UND ROTATIONSKÖRPER**

(30) Priorität: 16.09.2015 DE 102015217691
(71) Anmelder: Gallus Druckmaschinen GmbH, 35428 Langgöns-Oberkleen (DE)
(72) Erfinder: Demand, Thomas, 35578 Wetzlar (DE)
(74) Vertreter: Fritz, Martin Richard

(57) **Zusammenfassung**

Die Erfindung betrifft ein Verfahren zur Herstellung eines Rotationskörpers (10) und einen solchen Rotationskörper (10), z.B. einen Druckzylinder.

Gemäß dem Verfahren erfolgt zuerst ein Strangpressen eines Pressbarrens zu einem rotationssymmetrischen Profil (1), dann ein Ablängen des Profils (1) und sodann ein spanendes Bearbeiten des Profils (1), insbesondere durch Drehen, zur Schaffung von Achszapfen (3).

Dieses Verfahren hat den Vorteil, dass Rotationsköiper (10) für unterschiedliche Druckformate kostengünstig und schnell gefertigt werden können.

## Beschreibung

Die Erfindung betrifft ein Verfahren zur Herstellung eines Rotationskörpers mit den Merkmalen von Anspruch 1 und einen Rotationskörper gemäß dem Oberbegriff von Anspruch 5.

### Stand der Technik

An für den Etikettendruck oder Verpackungsdruck konzipierte oder eingesetzte Druckmaschinen werden zunehmend hohe Anforderungen hinsichtlich der Wirtschaftlichkeit und der Einfachheit der Bedienung bei gleichzeitig maximierter Variabilität für die Produktherstellung gestellt. Beispielsweise soll die Druckmaschine möglichst wenig Makulatur, beispielsweise beim Umrüsten zwischen verschiedenen Druckaufträgen, auch zwischen verschiedenen Druckverfahren oder Drucklängen, verursachen. Geläufige für den Etikettendruck, insbesondere für den Selbstklebeetikettendruck, ausgelegte Schmalbahndruckmaschinen in Reihenbauweise weisen meist einen Maschinenaufbau auf, in dem ein Bedruckstoff oder ein Substrat über eine Vielzahl von Zylindern und Walzen zwischen verschiedenen Prozessebenen (beispielsweise für den Druck und für die Trocknung) geführt wird. Eine zwischen verschiedenen Druckverfahren umrüstbare Etikettendruckmaschine ist im Dokument WO 2005/028202 A1 beschrieben.

Beim Umrüsten zwischen verschiedenen Druckaufträgen kann es erforderlich sein, dass die Druckzylinder und ggfs. auch andere Rotationskörper ausgetauscht werden. Auch unterliegen die Druckzylinder einem gewissen Verschleiß und müssen gelegentlich ausgetauscht werden. Weiter kann es notwendig werden, dass die Druckzylinder zu Reinigungszwecken aus der Druckmaschine ausgebaut werden können.

Die aus dem Stand der Technik bekannten Rotationskörper, welche als Druckzylinder, Gegendruckzylinder, Stanzzylinder, Gegenstanzzylinder, Rasterwalzen, Kühlwalzen, Leitwalzen, etc. verwendet werden, haben in der Regel einen aufwändigen Aufbau. Der Rotationskörper wird dabei entweder durch eine Vielzahl von Elementen gebildet, wobei die Elemente bei der Montage des Rotationskörpers zusammengesetzt und miteinander verbunden werden müssen, beispielsweise durch Verschrauben oder Verschweißen. Die DE 24 02 206 C2 zeigt beispielsweise einen Gegendruckzylinder und die DE 10 2009 009 297 A1 zeigt beispielsweise eine Kühlwalze.

Weiterhin bekannt sind Vollzylinder mit angeflanschten Wellenenden. Nachteilig an diesen ist, dass diese schwer, teuer und aufwändig in der Bearbeitung sind.

Weiterhin nachteilig bei den aus dem Stand der Technik bekannten Rotationskörpern sind die erforderliche umfangreiche Lagerhaltung sowie häufig lange Lieferzeiten für die Lieferung von neuen Rotationskörpern.

### Aufgabenstellung

Aufgabe der vorliegenden Erfindung ist es daher, ein Verfahren zur Herstellung eines Rotationskörpers zu beschreiben, welches eine kostengünstigere und schnellere Herstellung von Rotationskörpern erlaubt, und einen Rotationskörper zu schaffen, welcher unaufwändig zu fertigen und kostengünstig ist.

Gelöst wird diese Aufgabe durch ein Verfahren zur Herstellung eines Rotationskörpers mit den Merkmalen von Anspruch 1. Das erfindungsgemäße Verfahren zur Herstellung eines Rotationskörpers für eine Rotationsdruckmaschine, insbesondere zur Herstellung eines Druckzylinders, umfasst die nachfolgenden Schritte:
In einem ersten Schritt erfolgt ein Strangpressen eines Pressbarrens zu einem rotationssymmetrischen Profil mit einem ersten Außendurchmesser in einer Strangpresse. Das so erhaltene Profil wird nachfolgend entsprechend der Arbeitsbreite der Druckmaschine abgelängt, z.B. auf Länge zugesägt. Daraufhin erfolgt ein spanendes Bearbeiten des Profils, insbesondere durch Drehen, zur Schaffung von je einem endseitigen Achszapfen mit einem zweiten Außendurchmesser, wobei der zweite Außendurchmesser kleiner als der erste Außendurchmesser ist. Das spanende Bearbeiten kann insbesondere als Längs-Rund- Drehen, zum Beispiel auf einer CNC-Drehmaschine, erfolgen.

Dieses Verfahren hat den Vorteil, dass Rotationskörper für unterschiedliche Druckformate und entsprechend unterschiedliche Druckbreiten des durch die Rotationsdruckmaschine zu bedruckenden Substrats kostengünstig und schnell gefertigt werden können.

In vorteilhafter Weiterbildung des erfindungsgemäßen Verfahrens zur Herstellung eines Rotationskörpers wird in einem weiteren Schritt ein spanendes Bearbeiten, insbesondere durch Drehen des Profils im Bereich eines zentralen Zylinderkörpers des Rotationskörpers zur Reduzierung des ersten Außendurchmessers auf einen Zylinderdurchmesser durchgeführt. Somit kann der Zylinderdurchmesser des Rotationskörpers auf einfache Art und Weise beispielsweise an unterschiedliche Drucklängen angepasst werden.

In vorteilhafter Weiterbildung des erfindungsgemäßen Verfahrens erfolgt in einem zusätzlichen Schritt eine Oberflächenbehandlung des zentralen Zylinderkörpers des Rotationskörpers, zum Beispiel zur Erhöhung der Rundheit, der Härte oder der Korrosionsbeständigkeit.

In einer besonders vorteilhaften Ausgestaltung des Verfahrens zur Herstellung eines Rotationskörpers wird beim Strangpressen der erste Außendurchmesser des Profils aus einer Mehrzahl von diskreten Werten ausgewählt und vorgegeben. So können beispielsweise drei unterschiedliche Außendurchmesser-Werte vorgesehen sein: 15 cm, 20 cm und 25 cm. Davon abweichende, gewünschte Zylinderdurchmesser werden dann realisiert durch spanendes Bearbeiten des zentralen Zylinderkörpers. Für einen Zylinderdurchmesser von beispielsweise 19 cm wird, ausgehend von einem Profil mit 20 cm, rundherum 0,5 cm durch Drehen abgenommen.

Die Erfindung betrifft auch einen Rotationskörper für eine Rotationsdruckmaschine, insbesondere einen Druckzylinder für eine Rotationsdruckmaschine, alternativ auch einen Gegendruckzylinder, Stanzzylinder, Gegenstanzzylinder, Rasterwalze, Kühlwalze, Umlenkrolle, etc., welche insbesondere nach einem wie obenstehend beschriebenen Verfahren gefertigt sein kann. Der Rotationskörper weist einen zentralen Zylinderkörper zum Kontaktieren eines Bedruckstoffes, zum Beispiel eines Bogens oder einer Bahn aus Papier, Karton, Kunststoff etc. und jeweils endseitig axial dazu angeordnete Achszapfen zur Lagerung des Rotationskörpers in der Rotationsdruckmaschine auf. Erfindungsgemäß ist der Rotationskörper einteilig, d. h. ohne Verbinden, zum Beispiel Verschrauben oder Verschweißen mit weiteren Teilen, wie zum Beispiel Achsen, aus einem stranggepressten, rotationssymmetrischen Profil aufgebaut. Das Profil kann beispielsweise ein Alu-, Stahl- oder Kunststoffprofil sein. In einer besonders vorteilhaften und daher bevorzugten Weiterbildung des erfindungsgemäßen Rotationskörpers ist der Rotationskörper im Bereich seiner Achszapfen spanend bearbeitet, d. h. die Achszapfen sind aus dem gleichen, einen Grundkörper, wie der Zylinderkörper, herausgearbeitet und der Außendurchmesser der Achszapfen ist kleiner als der Außendurchmesser des Zylinderkörpers.

In vorteilhafter Ausgestaltung des Rotationskörpers weist das Profil einen zylindrischen Kern, einen ihn umgebenden Hohlzylinder und Streben zum Verbinden von Kern und Hohlzylinder auf. Der Kern kann dabei massiv oder ebenfalls als Hohlzylinder ausgeformt sein. Dabei kann die Stärke des Hohlzylinders abhängig vom Außendurchmesser des Zylinderkörpers variieren und der Durchmesser des Kerns einheitlich sein, auch bei unterschiedlichen Außendurchmessern des Zylinderkörpers. Das heißt, es gibt nur einen festen Durchmesser des Kerns, damit daraus Achszapfen mit einheitlichem Durchmesser gefertigt werden können und keine Anpassungen der Lagerstellen in der Rotationsdruckmaschine erforderlich werden.

In einer Ausführungsvariante des erfindungsgemäßen Rotationskörpers hat der Rotationskörper an zumindest einer seiner Oberflächen eine Oberflächenbearbeitung und/oder eine Oberflächenbehandlung erfahren, zum Beispiel Honen, Läppen, Beschichten und/oder Härten.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1a: ein einsatzbereiter Rotationskörper
- Fig. 1b: ein Profil zur Fertigung eines Rotationskörpers
- Fig. 2a und b: Seitenansichten von Rotationskörpern
- Fig. 3a-d: Draufsichten auf Profile und Rotationskörper
- Fig. 4: eine Druckmaschine mit Rotationskörpern

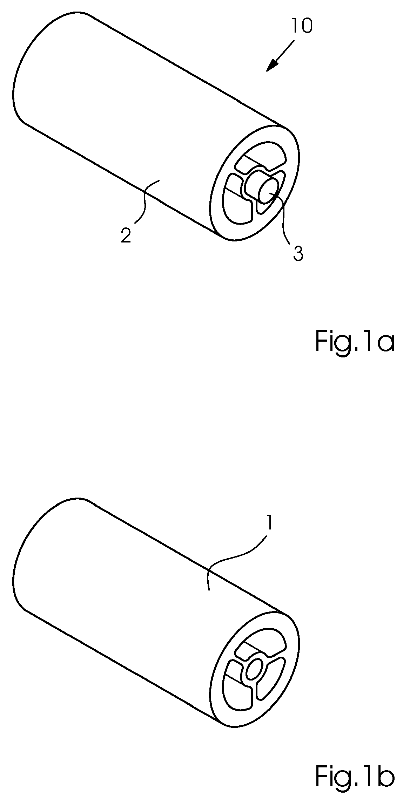

In Figur 1a ist ein Rotationskörper 10 in einer 3D-Darstellung gezeigt. Der Rotationskörper 10 besitzt einen zentralen Zylinderkörper 2, welcher mit einem hier nicht dargestellten Substrat 1000 in Kontakt steht. Weiter besitzt der Rotationskörper 10 an seinen beiden Enden jeweils einen Achszapfen 3, welcher der Lagerung des Rotationskörpers im Maschinengestell der Druckmaschine 100 (hier nicht dargestellt) dient.

Der in Figur 1a dargestellte Rotationskörper 10 wurde aus einem in Figur 1b dargestellten stranggepressten Profil 1 hergestellt.

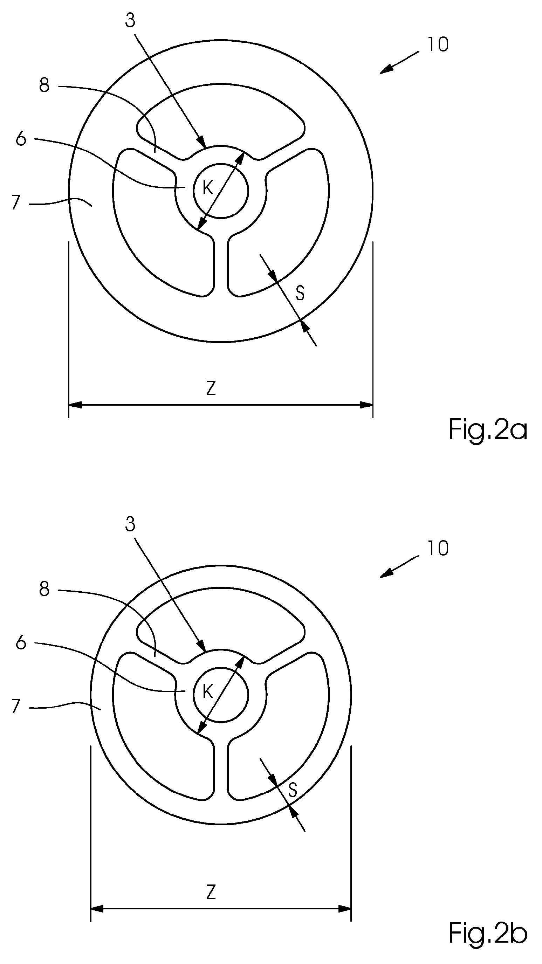

In den Figuren 2a und 2b sind seitliche Ansichten auf zwei unterschiedliche Rotationskörper 10 dargestellt. Dabei ist zu erkennen, dass der Rotationskörper 10 aus einem stranggepressten Profil 1 hergestellt wurde, welches einen mittigen zylindrischen Kern 6 und einen diesen umgebenden Hohlzylinder 7 aufweist, wobei der Hohlzylinder 7 über Streben 8 mit dem zylindrischen Kern 6 verbunden ist. Der zylindrische Kern 6 wiederum ist ebenfalls als Hohlzylinder ausgeführt. Während der Durchmesser K des Kerns 6 in beiden Ausführungsbeispielen den gleichen Wert aufweist, ist die Stärke S des Hohlzylinders 8 im Ausführungsbeispiel von Figur 2a größer als im Ausführungsbeispiel von Figur 2b. Damit ergibt sich in ersterem Fall ein größerer Außendurchmesser Z des Zylinderkörpers 2 und im zweiten Fall ein kleinerer Außendurchmesser Z des Zylinderkörpers. Eine derartige Reduzierung des Außendurchmessers Z bzw. der Stärke S kann erreicht werden, indem der Zylinderkörper 2 spanend bearbeitet wird.

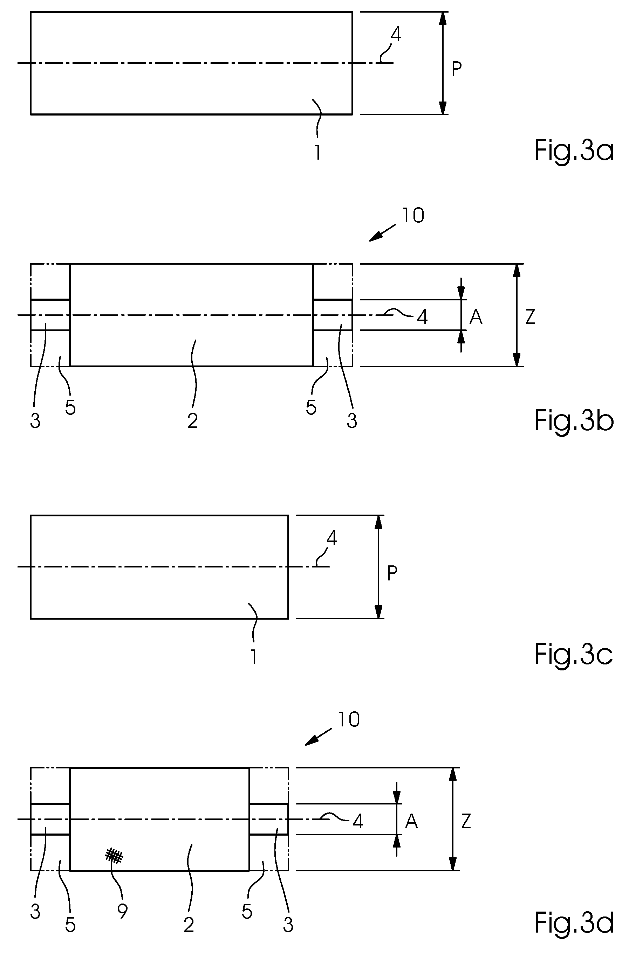

In den Figuren 3a und 3b ist der Herstellungsprozess eines ersten Rotationskörpers 10 angedeutet. In den Figuren 3c und 3d ist der Herstellungsprozess eines zweiten Rotationskörpers 10 angedeutet, welcher eine geringere Breite aufweist und damit besonders in einer Druckmaschine 100 mit geringerer Maschinenbreite zum Einsatz gelangen kann. In den Figuren 3a und 3c ist jeweils ein auf die richtige Länge zugeschnittenes stranggepresstes Profil 1 gezeigt. Das stranggepresste Profil 1 ist rotationssymmetrisch zur Symmetrieachse 4 und weist einen Außendurchmesser P auf. Ausgehend von diesem stranggepressten Profil 1 erfolgt an den beiden Enden des stranggepressten Profils 1 eine spanende Bearbeitung. In den Figuren 3b und 3d ist der Bereich, in welcher die spanende Bearbeitung erfolgte, mit dem Positionszeichen 5 beschrieben. Durch die spanende Bearbeitung werden endseitig jeweils Achszapfen 3 herausgebildet, welche ebenfalls symmetrisch zur Rotations- und Symmetrieachse 4 des Rotationskörpers 10 sind. Sofern eine Oberflächenbearbeitung 9 im Bereich des Zylinderkörpers 2 erfolgt, ist der Außendurchmesser Z des Zylinderkörpers 2 geringer als der Außendurchmesser P des Profils 1. Erfolgt keine Bearbeitung, so sind der Außendurchmesser des Zylinderkörpers Z und der Außendurchmesser des Profils P gleich groß. Der Außendurchmesser A der Achszapfen 3 ist in jedem Fall geringer als der Außendurchmesser Z des Zylinderkörpers sowie der Außendurchmessers P des Profils 1. Alternativ bzw. ergänzend zu einer Oberflächenbearbeitung des Zylinderkörpers 2 kann auch eine Oberflächenbehandlung 9 des Zylinderkörpers 2 erfolgen. Dabei kann es sich beispielsweise um eine Verbesserung der Rauheit, Rundheit oder Härte handeln.

Wie es sich aus den Figuren 3a bis 3d ergibt, sind die Rotationskörper 10 einteilig ausgeführt und werden jeweils durch spanende Bearbeitung aus dem stranggepressten Profil 1 herausgearbeitet.

Soll z. B. eine Rasterwalze hergestellt werden, so kann dies auch nach dem beschriebenen Verfahren erfolgen. Der Rotationskörper kann durch entsprechende Weiterverarbeitung, wie z. B. durch Aufbringen einer Keramikschicht mit anschließendem Finishing eine näpfchenförmige Oberfläche erhalten.

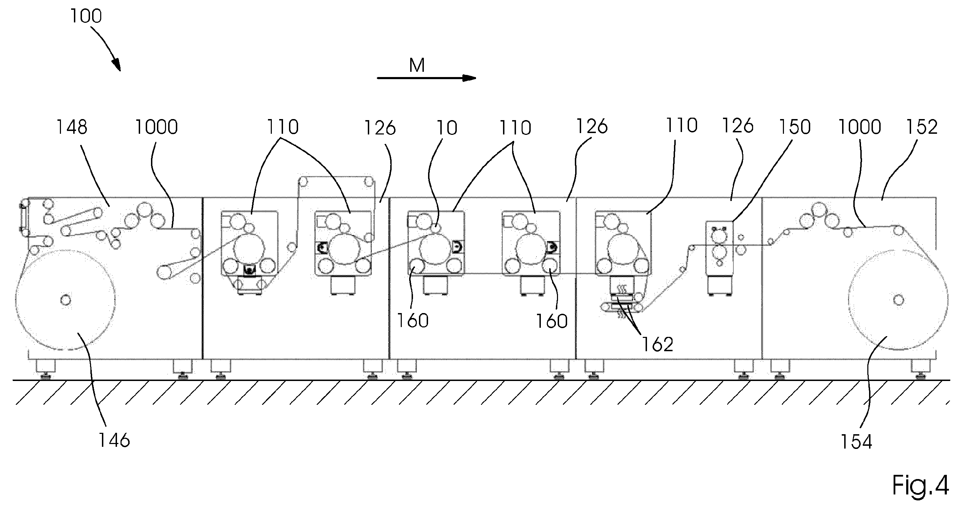

In der Figur 4 ist eine Ansicht einer bevorzugten Ausführungsform einer Druckmaschine 100, genauer einer Schmalbahn-Etikettendruckmaschine in Reihenbauweise, mit in horizontaler Richtung folgenden Druckwerken 110 gezeigt. Die Etikettendruckmaschine dient der Bearbeitung eines Substrats 1000 in Bahnform. Das Substrat wird von einer Substratrolle 146 in einem Zuführteil 148 der Druckmaschine 142 abgerollt und entlang eines Weges in Maschinenlaufrichtung M durch die Druckmaschine 142 geführt. Die Druckmaschine 142 kann eine Mehrzahl von Gestellmodulen 126, hier beispielhaft drei Gestellmodule 126, aufweisen, welche zusammen das Maschinengestell bilden. In dieser Ausführungsform sind jeweils zwei Druckwerke 110 beziehungsweise ein Druckwerk 110 und ein Bearbeitungswerk 150, hier ein Stanzwerk zum Ausstanzen der Etiketten auf dem bahnförmigen Substrat 100, an einem Gestellmodul 126 aufgenommen. Druckwerke 110 und Bearbeitungswerk 150 weisen Rotationskörper 10 auf, welche wie obenstehend beschrieben ausgeführt sein können. Nach den einzelnen Bearbeitungsstationen folgt ein Auslaufteil 152, in welchem die fertigen Produkte in eine Etikettenrolle 154 aufgewickelt werden. Zuführteil 148, Gestellmodule 126 und Auslaufteil 152 sind lösbar bzw. trennbar miteinander verbunden sodass sich ein modularer Aufbau der Druckmaschine 142 ergibt. In der Darstellung der einzelnen Druckwerke 110, hier Flexodruckwerke sind neben den Druckzylindern, den Gegendruckzylindern und den Farbauftragswalzen auch Kammerrakel gezeigt. Des Weiteren weisen die Druckwerke 110 in der Druckmaschine 100 diverse Trocknungseinrichtungen auf: Den Gegendruckzylindern sind an dem jeweiligen Druckspalt des Druckwerks 110 nachgeordnet UV-Trocknungseinrichtungen zugeordnet, so dass das bedruckte Substrat 1000 direkt auf dem Gegendruckzylinder getrocknet werden kann. Die Druckwerke 110 weisen auch Bahnleitwalzen 160 zur Führung des bahnförmigen Substrats 1000 auf. In der gezeigten Ausführungsform umfasst das fünfte Druckwerk 110 eine Heißlufttrocknungseinrichtung 162. Alternativ könnte auch hier eine UV- oder eine IR-Trocknungseinrichtung eingesetzt werden. Nachfolgend ist ein Stanzwerk 150 angeordnet, welches als rotierende Werkzeuge einen Stanzzylinder und einen Gegenstanzzylinder aufweist. Zusätzlich bzw. alternativ zu dem Stanzwerk kann auch ein Prägewerk, beispielsweise ein Heißfolienprägewerk Verwendung finden. Alternativ zu den dargestellten Flexodruckwerken können auch Tiefdruck-, Offset-Druckwerke und Rotationssiebdruckwerke eingesetzt werden.

### Bezugszeichenliste

- 1: Stranggepresstes Profil
- 2: Zylinderkörper
- 3: Achszapfen
- 4: Rotations- und Symmetrieachse
- 5: Bereich der spanenden Bearbeitung
- 6: Zylindrischer Kern
- 7: Hohlzylinder
- 8: Strebe
- 9: Oberflächenbearbeitung bzw. -behandlung
- 10: Rotationskörper, z. B. Druckzylinder

- 100: Druckmaschine
- 110: Druckwerk
- 126: Gestellmodul
- 146: Substratrolle
- 150: Stanzwerk
- 152: Auslaufstation
- 154: Etikettenrolle
- 160: Bahnleitwalze
- 162: Heißlufttrockner

- 1000: Substrat

- A: Außendurchmesser Achszapfen
- K: Durchmesser Kern
- M: Maschinenlaufrichtung
- S: Stärke Hohlzylinder
- Z: Außendurchmesser Zylinderkörper

## Patentansprüche

1. Verfahren zur Herstellung eines Rotationskörpers (10) für eine Rotationsdruckmaschine (100), insbesondere eines Druckzylinders, mit nachfolgenden Schritten:
a) Strangpressen eines Pressbarrens, zu einem rotationssymmetrischen Profil (1) mit einem ersten Außendurchmesser (P)
b) Ablängen des Profils (1)
c) Spanendes Bearbeiten des Profils (1), insbesondere durch Drehen, zur Schaffung von Achszapfen (3) mit einem zweiten Außendurchmesser (A),
wobei der zweite Außendurchmesser (A) kleiner als der erste Außendurchmesser (P) ist.

2. Verfahren zur Herstellung eines Rotationskörpers nach Anspruch 1 mit dem zusätzlichen Schritt:
d) Spanendes Bearbeiten, insbesondere durch Drehen, des Profils (1) im Bereich eines zentralen Zylinderkörpers (2) des Rotationskörpers (10) zur Reduzierung des ersten Außendurchmessers (P)

3. Verfahren zur Herstellung eines Rotationskörpers nach einem der Ansprüche 1 oder 2 mit dem zusätzlichen Schritt:
e) Oberflächenbearbeitung und/oder Oberflächenbehandlung (9) eines bzw. des zentralen Zylinderkörpers (2) des Rotationskörpers (10).

4. Verfahren zur Herstellung eines Rotationskörpers nach einem der vorangehenden Ansprüche,
**dadurch gekennzeichnet,**
**dass** im Schritt a) der erste Außendurchmesser (P) aus einer Mehrzahl von diskreten Werten ausgewählt und vorgegeben wird.

5. Rotationskörper (10) für eine Rotationsdruckmaschine (100), insbesondere Druckzylinder, insbesondere gefertigt nach einem Verfahren nach einem der vorangehenden Ansprüche, mit einem zentralen Zylinderkörper (2) und jeweils axial dazu angeordneten Achszapfen (3),
**dadurch gekennzeichnet,**
**dass** der Rotationskörper (10) einteilig aus einem stranggepressten Profil (1) aufgebaut ist.

6. Rotationskörper nach Anspruch 5,
**dadurch gekennzeichnet,**
**dass** der Rotationskörper (10) im Bereich seiner Achszapfen (3) spanend bearbeitet ist und dass der Außendurchmesser der Achszapfen (A) kleiner als der Außendurchmesser des Zylinderkörpers (Z) ist.

7. Rotationskörper nach Anspruch 5 oder 6,
**dadurch gekennzeichnet,**
**dass** das Profil (1) einen zylindrischen Kern (6), einen Hohlzylinder (7) und Streben (8) zum Verbinden von Kern (6) und Hohlzylinder (7) aufweist.

8. Rotationskörper nach Anspruch 7,
**dadurch gekennzeichnet,**
**dass** die Stärke (S) des Hohlzylinders (7) abhängig vom Außendurchmesser (Z) des Zylinderkörpers variiert und der Durchmesser (K) des Kerns einheitlich ist.

9. Rotationskörper nach einem der Ansprüche 5 bis 8,
**dadurch gekennzeichnet,**
**dass** der Rotationskörper (10) an zumindest einer seiner Oberflächen eine Oberflächenbearbeitung und/oder Oberflächenbehandlung (9) erfahren hat.
